# EUROPÄISCHE PATENTSCHRIFT

(11) **EP 3 552 256 B1**
(45) Veröffentlichungstag und Bekanntmachung des Hinweises auf die Patenterteilung: **26.04.2023**
(21) Anmeldenummer: 17800775.3
(22) Anmeldetag: 08.11.2017
(51) Int. Cl.: H01M 10/04, H01M 50/258, H01M 50/204, H01M 50/262, B60L 50/60

(54) **BATTERIE UND VERFAHREN ZUR HERSTELLUNG EINER BATTERIE**
BATTERY AND METHOD FOR PRODUCING A BATTERY
BATTERIE ET PROCÉDÉ DE FABRICATION D'UNE BATTERIE

(30) Priorität: 08.12.2016 DE 102016224442
(43) Veröffentlichungstag der Anmeldung: 16.10.2019
(73) Patentinhaber: Robert Bosch GmbH, 70442 Stuttgart (DE)
(72) Erfinder: REIMER, Eduard, 70374 Stuttgart (DE); RUEHLE, Andreas, 74321 Bietigheim-Bissingen (DE)
(86) Internationale Anmeldenummer: PCT/EP2017/078521
(87) Internationale Veröffentlichungsnummer: WO 2018/103979

(56) Entgegenhaltungen:
- WO-A1-2011/154098
- DE-A1-102011 075 044
- DE-A1-102013 220 898
- DE-A1-102013 225 605
- DE-A1-102014 216 407
- DE-A1-102015 207 746
- DE-B3-102013 207 592

## Beschreibung

### Feld der Erfindung

Die vorliegende Erfindung bezieht sich auf eine Batterie und ein Verfahren zur Herstellung einer Batterie gemäß dem Oberbegriff der unabhängigen Patentansprüche.

### Stand der Technik

DE 10 2011 081 573 A1 zeigt ein Baukastensystem zur Herstellung eines elektrischen Energiespeichers und einen mit diesem Baukastensystem hergestellten elektrischen Energiespeicher.

Aus der DE 10 2012 204 320 A1 ist eine Fußprofilkonstruktion für ein Batteriekühlmodul für eine stoffschlussfreie komprimierte Schnittstellenverbindung mit leitender Rippe beziehungsweise leitendem Fuß bekannt.

DE 10 2013 225 605 A1 zeigt eine Anordnung von Batteriemodulen in einem Batterietrog. Weitere relevante Dokumente sind DE 10 2013 207592 B3, DE 10 2011 075044 A1 und DE 10 2013 220898 A1.

Batteriesysteme finden sowohl in stationären Anwendungen, wie Windkraftanlagen oder Solarenergiesystemen, als auch in Kraftfahrzeugen, wie Hybridfahrzeuge oder Elektrofahrzeuge, oder in Elektronikgeräten, wie Laptops oder Mobiltelefonen, Anwendung.

### Offenbarung der Erfindung

Die Erfindung geht aus von einer Batterie aufweisend ein Gehäuse und zumindest ein erstes Batteriemodul und ein zweites Batteriemodul. Die Erfindung wird im unabhängigen Anspruch 1 offenbart.

Der Kern der Erfindung besteht darin, dass ein Gehäuse des ersten Batteriemoduls eine Nut aufweist,
wobei ein Gehäuse des zweiten Batteriemoduls eine Feder aufweist,
wobei das erste Batteriemodul mittels eines Verbindungsmittels mit dem Gehäuse der Batterie verbunden ist,
wobei die Feder und das Verbindungsmittel zumindest teilweise in der Nut angeordnet sind, insbesondere spielfrei in der Nut aufgenommen sind.

Hintergrund der Erfindung ist, die Batteriemodule platzsparend in dem Gehäuse der Batterie anzuordnen und sicher mit dem Gehäuse der Batterie zu verbinden.

Erfindungsgemäß ist jedes Batteriemodul mittels des Verbindungsmittels mit dem Gehäuse der Batterie verbunden und mittels einer Nut-Feder-Verbindung mit einem weiteren Batteriemodul verbunden. Dadurch dass sowohl die Feder als auch das Verbindungsmittel in einer Nut angeordnet sind, ist die Batterie kompakt ausführbar. Weitere vorteilhafte Ausführungsformen der vorliegenden Erfindung sind Gegenstand der Unteransprüche.

Erfindungsgemäß ist das Verbindungsmittel mittels eines Schraubmittels mit dem Gehäuse der Batterie verbunden, wobei das Verbindungsmittel eine Ausnehmung aufweist, durch die das Schraubmittel zumindest teilweise hindurchgeführt ist. Von Vorteil ist dabei, dass das erste Batteriemodul mittels des Verbindungsmittels und des Schraubmittels lösbar mit dem Gehäuse der Batterie verbunden ist. Somit ist das erste Batteriemodul in der Batterie austauschbar angeordnet.

Vorzugsweise ist das Schraubmittel von der Nut beabstandet. Somit ist das Schraubmittel mit dem Gehäuse verbindbar und/oder von dem Gehäuse lösbar, wenn das Verbindungsmittel in der Nut angeordnet ist.

Ferner ist es von Vorteil, wenn die Feder, das Schraubmittel und das Verbindungsmittel einander überlappen, insbesondere in Richtung eines Normalenvektors einer Ebene eines Flächenabschnitts des Gehäuses der Batterie auf dem die Batteriemodule angeordnet sind. Dadurch sind die Batteriemodule platzsparend anordenbar und die Batterie ist kompakt ausführbar.

Vorteilhafterweise verdeckt die Feder das Schraubmittel. Somit wird ein ungewolltes Lösen des Schraubmittels verhindert.

Vorzugsweise ist das Schraubmittel, insbesondere ein Schraubenkopf des Schraubmittels, zumindest teilweise zwischen der Feder und dem Verbindungsmittel angeordnet, insbesondere wobei die Feder das Schraubmittel berührt. Von Vorteil ist dabei, dass das Schraubmittel, insbesondere der Schraubenkopf, zumindest teilweise eingehaust mittels der Nut, der Feder und des Verbindungsmittels. Somit wird ein ungewolltes Lösen des Schraubmittels verhindert.

Erfindungsgemäß ist das Verbindungsmittel verschiebbar in der Nut angeordnet ist. Dadurch ist die Position des Verbindungsmittels anpassbar an die Position einer Ausnehmung, insbesondere Gewindebohrung, zur Aufnahme des Schraubmittels in dem Gehäuse der Batterie.

Ferner ist es von Vorteil, wenn das zweite Batteriemodul begrenzt ist mittels der in der Nut angeordneten Feder, insbesondere in Richtung eines Normalenvektors einer Ebene eines Flächenabschnitts des Gehäuses der Batterie auf dem die Batteriemodule angeordnet sind. Dabei liegt das zweite Batteriemodul auf dem Gehäuse der Batterie auf und ein Lösen des Batteriemoduls von dem Gehäuse wird mittels der in der Nut angeordneten Feder verhindert.

Gemäß einer weiteren vorteilhaften Ausführungsform weist das erste Batteriemodul eine weitere Feder auf, die von der Nut beabstandet angeordnet ist. Vorzugsweise ist zumindest eine Batteriezelle des ersten Batteriemoduls zwischen der Nut und der weiteren Feder in dem Gehäuse der ersten Batteriezelle angeordnet. Mittels der weiteren Feder ist das erste Batteriemodul mit einem weiteren Batteriemodul verbindbar. Vorteilhafterweise ist das weitere Batteriemodul ebenfalls mit dem Gehäuse der Batterie verbunden, so dass das erste Batteriemodul in zwei voneinander beabstandeten Bereichen mit dem Gehäuse der Batterie verbindbar ist.

Vorzugsweise weist das zweite Batteriemodul eine weitere Nut auf, die von der Feder beabstandet ist, wobei das zweite Batteriemodul mittels eines weiteren Verbindungsmittels mit dem Gehäuse der Batterie verbunden ist, wobei das weitere Verbindungsmittel zumindest teilweise in der weiteren Nut angeordnet ist. Vorzugsweise ist zumindest eine Batteriezelle des zweiten Batteriemoduls zwischen der weiteren Nut und der Feder in dem Gehäuse der zweiten Batteriezelle angeordnet. Somit ist das zweite Batteriemodul an zwei voneinander beabstandeten Bereichen mit dem Gehäuse der Batterie verbindbar.

Von Vorteil ist es weiterhin, wenn die jeweilige Nut und die jeweilige Feder des jeweiligen Batteriemoduls sich jeweils im Wesentlichen parallel zueinander erstrecken. Somit ist mindestens eine Batteriezelle des jeweiligen Batteriemoduls zwischen der jeweiligen Nut und der jeweiligen Feder anordenbar. Die jeweiligen Batteriemodule sind im Wesentlichen parallel zueinander anordenbar.

Gemäß einer weiteren vorteilhaften Ausführungsform weist das Gehäuse des jeweiligen Batteriemoduls jeweils einen Gehäuseboden auf, wobei die jeweilige Nut in dem Gehäuseboden ausgeformt ist, und/oder wobei der Gehäuseboden die jeweilige Feder aufweist. Dadurch ist die Anzahl der Bauteile des jeweiligen Batteriemoduls reduzierbar. Vorteilhafterweise sind der Gehäuseboden und die Nut und/oder die Feder in einem Arbeitsgang fertigbar, insbesondere als Gussteil, vorzugsweise als Stranggussteil.

Vorzugsweise ist der jeweilige Gehäuseboden hohl ausgeführt zur Aufnahme eines Kühlfluids, insbesondere wobei der jeweilige Gehäuseboden eine Einlassöffnung und eine Auslassöffnung für das Kühlfluid aufweist. Somit ist eine integrierte Kühlung für die Batteriemodule ausführbar.

Die Erfindung bei dem Verfahren zur Herstellung einer Batterie, wie zuvor beschrieben beziehungsweise nach einem der auf die Batterie bezogenen Ansprüche, weist vorteilhafterweise die zeitlich aufeinanderfolgenden Verfahrensschritte, die im unabhängigen Anspruch 11 aufgeführt sind auf:
- in einem ersten Verfahrensschritt wird ein erstes Batteriemodul mit einem Gehäuse der Batterie verbunden, indem ein Verbindungsmittel in eine Nut des ersten Batteriemoduls eingeführt wird und mit dem Gehäuse der Batterie verbunden wird,
- in einem zweiten Verfahrensschritt wird ein zweites Batteriemodul mit dem ersten Batteriemodul formschlüssig verbunden, indem eine Feder des zweiten Batteriemoduls in die Nut eingeführt wird,
- in einem dritten Verfahrensschritt wird das zweite Batteriemodul mit dem Gehäuse der Batterie verbunden, indem ein weiteres Verbindungsmittel in eine weitere Nut des zweiten Batteriemoduls eingeführt wird und mit dem Gehäuse der Batterie verbunden wird.

Hintergrund der Erfindung ist, die Batteriemodule platzsparend in dem Gehäuse der Batterie anzuordnen und sicher mit dem Gehäuse der Batterie zu verbinden. Vorteilhafterweise werden dabei die Batteriemodule miteinander verbunden.

Ferner ist es von Vorteil, wenn im ersten und/oder dritten Verfahrensschritt das Verbindungsmittel beziehungsweise das weitere Verbindungsmittel mittels eines Schraubmittels mit dem Gehäuse der Batterie verbunden wird. Somit ist das jeweilige die Batteriemodule lösbar mit dem Gehäuse der Batterie verbunden.

### Kurze Beschreibung der Zeichnungen

Im folgenden Abschnitt wird die Erfindung anhand von Ausführungsbeispielen, aus denen sich weitere erfinderische Merkmale ergeben können, auf die die Erfindung aber in ihrem Umfang nicht beschränkt ist, erläutert. Die Ausführungsbeispiele sind in den Zeichnungen dargestellt.

Es zeigt:
- Fig. 1: eine schematische Darstellung eines ersten Batteriemoduls 1 einer erfindungsgemäßen Batterie;
- Fig. 2: eine schematische Darstellung des ersten Batteriemoduls 1 in Schrägansicht;
- Fig. 3: eine schematische Darstellung des ersten Batteriemoduls 1 und eines zweiten Batteriemoduls 11 der erfindungsgemäßen Batterie
- und Fig. 4: eine Detailansicht von Fig. 3.

### Ausführungsformen der Erfindung

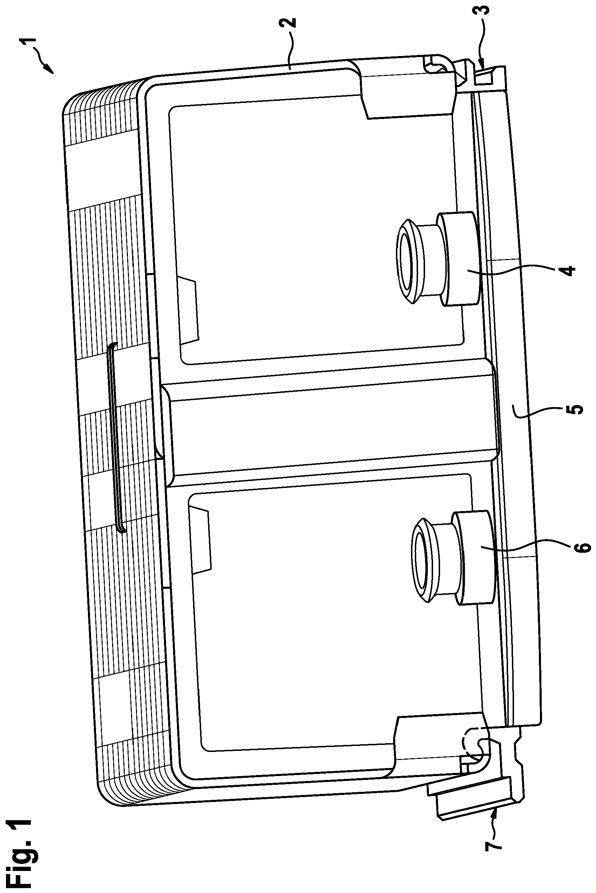

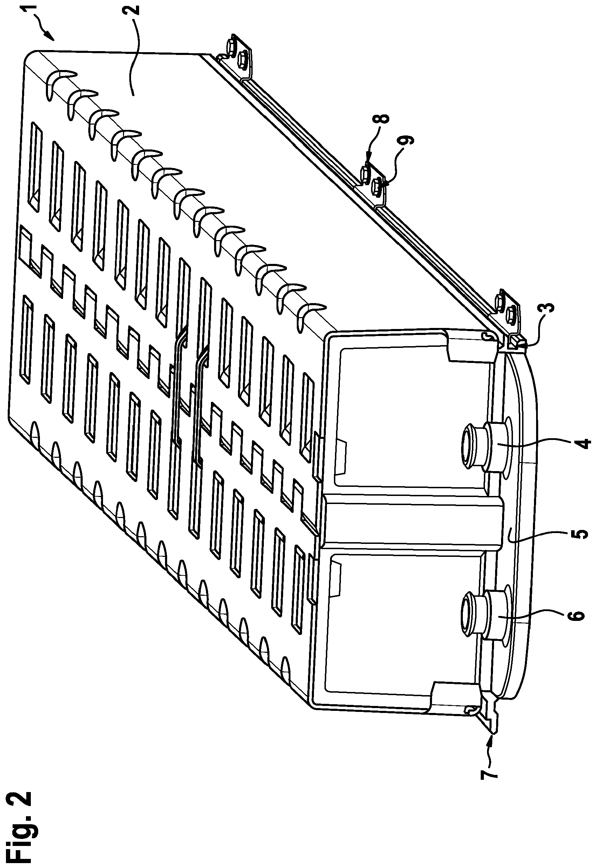

In Fig. 1 und 2 ist ein erstes Batteriemodul 1 einer erfindungsgemäßen Batterie dargestellt. Das erste Batteriemodul 1 ist von einem Gehäuse des ersten Batteriemoduls 1 zumindest teilweise eingehaust. Das Gehäuse weist eine Gehäusewandung, insbesondere ein Gehäuseteil 2, und einen Gehäuseboden 5 auf, insbesondere wobei das Gehäuse mehrstückig ausgeführt ist. Vorzugsweise ist die Gehäusewandung als Biegeteil, insbesondere Stanzbiegeteil ausgeführt. Vorzugsweise ist der Gehäuseboden 5 als Gussteil, insbesondere als Stranggussteil ausgeführt. In dem Gehäuse ist zumindest eine Batteriezelle des ersten Batteriemoduls 1 angeordnet.

Unter einer Batterie wird hierbei beispielsweise eine wiederaufladbare Batterie verstanden, insbesondere eine elektrochemische Batteriezelle und/oder ein Batteriemodul aufweisend zumindest eine elektrochemische Batteriezelle und/oder ein Batteriepack aufweisend zumindest ein Batteriemodul. Die Batteriezelle ist als lithiumbasierte Batteriezelle, insbesondere Lithium-Ionen-Batteriezelle, ausgeführt. Alternativ ist die Batteriezelle als Lithium-Polymer-Batteriezelle oder Nickel-Metallhydrid-Batteriezelle oder Blei-Säure-Batteriezelle oder Lithium-Luft-Batteriezelle oder Lithium-Schwefel-Batteriezelle ausgeführt.

Das erste Batteriemodul 1 ist im Wesentlichen quaderförmig ausgeführt. Entlang einer ersten Längsseite des ersten Batteriemoduls 1 ist eine Nut 3 angeordnet, die insbesondere in dem Gehäuseboden 5 ausgeführt ist. Dabei erstreckt sich die Nut 3 von einer Stirnseite des ersten Batteriemoduls 1 bis zu einer gegenüberliegenden Rückseite des ersten Batteriemoduls 1. Entlang einer zweiten Längsseite des ersten Batteriemoduls 1, die der ersten Längsseite gegenüberliegend angeordnet ist, ist eine Feder 7 angeordnet, die insbesondere einstückig mit dem Gehäuseboden 5 ausgeführt ist. Die Feder 7 erstreckt sich von der Stirnseite des ersten Batteriemoduls 1 bis zur Rückseite des ersten Batteriemoduls 1 insbesondere im Wesentlichen parallel zu der Nut 3.

In einem weiteren Ausführungsbeispiel weist das Gehäuse des ersten Batteriemoduls 1 ein erstes Verbindungsteil auf, in dem die Nut 3 ausgeformt ist. Das erste Verbindungsteil ist mit der Gehäusewandung formschlüssig verbunden, insbesondere klipsverbunden. Vorzugsweise ist das erste Verbindungsteil als Stranggussteil ausgeführt.

In einem weiteren Ausführungsbeispiel weist das Gehäuse des ersten Batteriemoduls 1 ein zweites Verbindungsteil auf, das die Feder 7 aufweist. Das zweite Verbindungsteil ist mit der Gehäusewandung 2 formschlüssig verbunden, insbesondere klipsverbunden. Vorzugsweise ist das zweite Verbindungsteil als Stranggussteil ausgeführt.

Mittels der Nut 3 beziehungsweise der Feder 7 ist das erste Batteriemodul 1 mit einem zweiten Batteriemodul 11 mittels einer Nut-Feder-Verbindung formschlüssig verbindbar.

In der Nut 3 ist zumindest ein Verbindungsmittel 8 aufgenommen, insbesondere wobei das Verbindungsmittel 8 innerhalb der Nut 3 in einer Erstreckungsrichtung der Nut 3 verschiebbar angeordnet ist. Mittels des Verbindungsmittels 8 ist das erste Batteriemodul 1 mit einem Gehäuse 20 der Batterie verbindbar. Dazu weist das Verbindungsmittel 8 zumindest eine Ausnehmung, insbesondere eine Bohrung, auf, durch die ein Schraubmittel 9 teilweise hindurchführbar ist. Somit ist das erste Batteriemodul 1 lösbar verbindbar, insbesondere schraubverbindbar, mit dem Gehäuse 20 der Batterie ausgeführt. Vorzugsweise ist das Verbindungsmittel 8 als Blechteil ausgeführt, insbesondere als Stanzbiegeblechteil. Ein erster Verbindungsmittelabschnitt 21 des Verbindungsmittels 8 ist in der Nut aufgenommen und ein zweiter Verbindungsmittelabschnitt 22 des Verbindungsmittels 8, der die Ausnehmung aufweist, erstreckt sich entlang des Gehäuses 20 der Batterie.

Vorzugsweise ist der Gehäuseboden 5 zumindest teilweise hohl ausgeführt und zur Aufnahme eines Kühlfluids zur Kühlung des ersten Batteriemoduls 1 geeignet. Dazu weist der Gehäuseboden 5 eine Einlassöffnung 4 und eine Auslassöffnung 6 für das Kühlfluid auf. Als Kühlfluid ist Kühlluft oder Kühlflüssigkeit verwendbar, beispielsweise Kühlwasser.

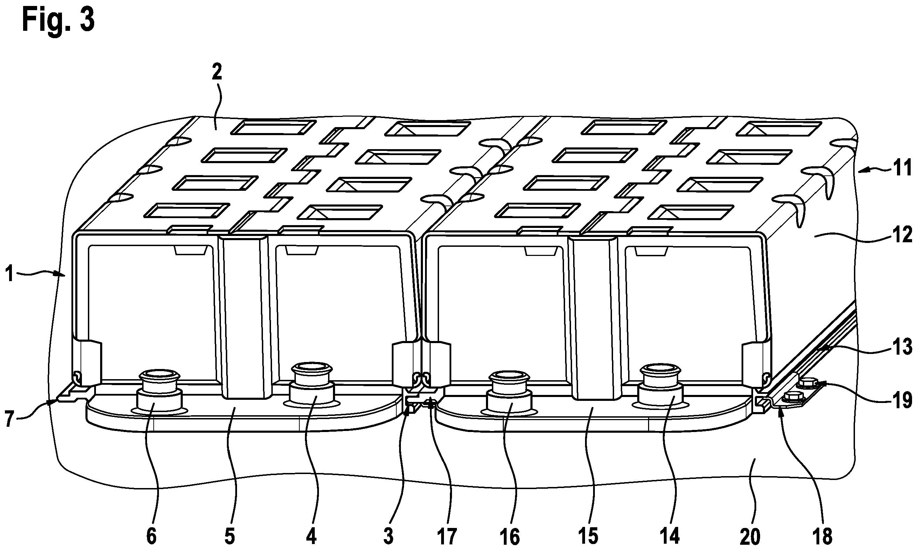

In Fig. 3 sind das erste und das zweite Batteriemodul (1, 11) dargestellt, die miteinander und mit dem Gehäuse 20 der Batterie verbunden sind. Dabei berühren sich das Gehäuse, insbesondere die Gehäusewandung 2, des ersten Batteriemoduls 1 und ein Gehäuse, insbesondere eine Gehäusewandung 12, des zweiten Batteriemoduls 11.

Das zweite Batteriemodul 11 ist von dem Gehäuse des zweiten Batteriemoduls 11 zumindest teilweise eingehaust. Das Gehäuse weist die Gehäusewandung 12, insbesondere ein Gehäuseteil, und einen Gehäuseboden 15 auf, wobei das Gehäuse insbesondere mehrstückig ausgeführt ist. Vorzugsweise ist die Gehäusewandung 12 als Biegeteil, insbesondere Stanzbiegeteil ausgeführt. Vorzugsweise ist der Gehäuseboden 15 als Gussteil, insbesondere als Stranggussteil ausgeführt.

Das zweite Batteriemodul 11 ist im Wesentlichen quaderförmig ausgeführt. Entlang einer ersten Längsseite des zweiten Batteriemoduls 11 ist eine Nut 13 angeordnet, die insbesondere in dem Gehäuseboden 15 ausgeführt ist. Dabei erstreckt sich die Nut 13 von einer Stirnseite des zweiten Batteriemoduls 11 bis zu einer Rückseite des zweiten Batteriemoduls 11. Entlang einer zweiten Längsseite des zweiten Batteriemoduls 11, die der ersten Längsseite gegenüberliegend angeordnet ist, ist eine Feder 17 angeordnet, die insbesondere einstückig mit dem Gehäuseboden 15 ausgeführt ist. Die Feder 17 erstreckt sich von der Stirnseite des zweiten Batteriemoduls 11 bis zu der Rückseite des zweiten Batteriemoduls 11, insbesondere im Wesentlichen parallel zu der Nut 13.

In einem weiteren Ausführungsbeispiel weist das Gehäuse des zweiten Batteriemoduls 11 ein erstes Verbindungsteil auf, in dem die Nut 3 ausgeformt ist. Das erste Verbindungsteil ist mit der Gehäusewandung 12 formschlüssig verbunden, insbesondere klipsverbunden. Vorzugsweise ist das erste Verbindungsteil als Stranggussteil ausgeführt.

In einem weiteren Ausführungsbeispiel weist das Gehäuse des zweiten Batteriemoduls 11 ein zweites Verbindungsteil auf, das die Feder 17 aufweist. Das zweite Verbindungsteil ist mit der Gehäusewandung 12 formschlüssig verbunden, insbesondere klipsverbunden. Vorzugsweise ist das zweite Verbindungsteil als Stranggussteil ausgeführt.

Mittels der Nut 13 beziehungsweise der Feder 17 ist das zweite Batteriemodul 11 mit dem ersten Batteriemodul 1 formschlüssig verbindbar mittels einer Nut-Feder-Verbindung.

In der Nut 13 ist zumindest ein Verbindungsmittel 18 aufgenommen, insbesondere wobei das Verbindungsmittel 18 innerhalb der Nut 13 in einer Erstreckungsrichtung der Nut 13 verschiebbar angeordnet ist. Mittels des Verbindungsmittels 18 ist das zweite Batteriemodul 11 mit dem Gehäuse 20 der Batterie verbindbar. Dazu weist das Verbindungsmittel 18 zumindest eine Ausnehmung, insbesondere eine Bohrung, auf, durch die ein Schraubmittel 19 teilweise hindurchführbar ist. Somit ist das zweite Batteriemodul 11 lösbar verbindbar, insbesondere schraubverbindbar, mit dem Gehäuse 20 der Batterie ausgeführt. Vorzugsweise ist das Verbindungsmittel 18 als Blechteil ausgeführt, insbesondere als Stanzbiegeblechteil. Ein erster Verbindungsmittelabschnitt des Verbindungsmittels 18 ist in der Nut aufnehmbar und ein zweiter Verbindungsmittelabschnitt des Verbindungsmittels 18, der die Ausnehmung aufweist, erstreckt sich entlang des Gehäuses 20 der Batterie.

Vorzugsweise ist der Gehäuseboden 15 des zweiten Batteriemoduls 11 zumindest teilweise hohl ausgeführt und zur Aufnahme eines Kühlfluids zur Kühlung des zweiten Batteriemoduls 11 geeignet. Dazu weist der Gehäuseboden 15 eine Einlassöffnung 14 und eine Auslassöffnung 16 für das Kühlfluid auf. Als Kühlfluid ist Kühlluft oder Kühlflüssigkeit verwendbar, beispielsweise Kühlwasser.

Beispielsweise strömt das Kühlfluid von dem Gehäuseboden 5 des ersten Batteriemoduls 1 in den Gehäuseboden 15 des zweiten Batteriemoduls 11, wobei diese mittels eines die Auslassöffnung 6 des ersten Batteriemoduls 1 mit der Einlassöffnung 14 des zweiten Batteriemoduls 11 verbindenden Verbindungsstücks, insbesondere Verbindungsrohres und/oder Verbindungsschlauches, miteinander verbunden sind.

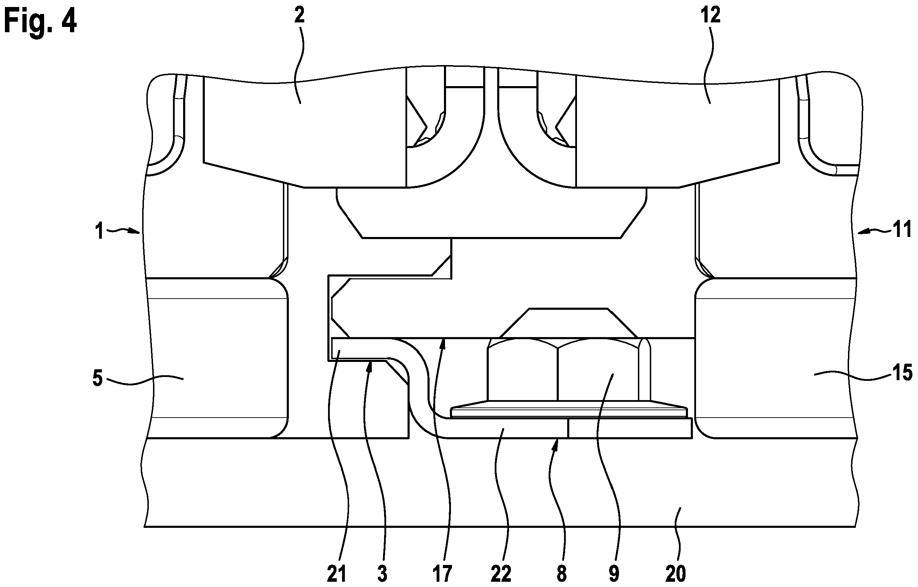

In Fig. 4 sind die Nut-Feder-Verbindung des ersten Batteriemoduls 1 mit dem zweiten Batteriemodul 11 und die Verbindung des jeweiligen Batteriemoduls (1, 11) mit dem Gehäuse 20 der Batterie im Detail dargestellt.

Es sind das Gehäuse des ersten Batteriemoduls 1, das die Nut 3 aufweist, das Gehäuse des zweiten Batteriemoduls 2, das die Feder 17 aufweist, das Verbindungsmittel 8 und das Schraubmittel 9 gezeigt. Die Feder 17 und das Verbindungsmittel 8 sind teilweise in der Nut 3 angeordnet, insbesondere spielfrei. Dabei überlappen die Nut 3, die Feder 17 und das Verbindungsmittel einander in einer Querrichtung zu einer Einschubrichtung der Feder 17 in die Nut 3 und der Erstreckungsrichtung der Nut 3. Vorzugsweise berührt die Nut 3 das Verbindungsteil 8 und die Feder 17.

Das Schraubmittel 9 ist teilweise durch die Ausnehmung in dem Verbindungsmittel 8 geführt und mit einem Gehäuse 20 der Batterie verbunden. Der Gehäuseboden 5 des ersten Batteriemoduls 1 liegt auf dem Gehäuse 20 der Batterie auf. Somit ist das erste Batteriemodul 1 mittels des Verbindungsmittels 8 und des Schraubmittels 9 kraftschlüssig und formschlüssig mit dem Gehäuse 20 der Batterie verbunden. Dabei begrenzt das Verbindungsmittel 8 das erste Batteriemodul 1, insbesondere in der Querrichtung zu der Einschubrichtung der Feder 17 in die Nut 3 und der Erstreckungsrichtung der Nut 3.

Das zweite Batteriemodul 11 ist mittels der Feder 17 des zweiten Batteriemoduls 11 und mittels der Nut 3 des ersten Batteriemoduls 1 formschlüssig mit dem ersten Batteriemodul 1 verbunden. Mittels der Feder 17, der Nut 3, des Verbindungsmittels 8 und des Schraubmittels 9 ist das zweite Batteriemodul 11 formschlüssig und kraftschlüssig mit dem Gehäuse 20 der Batterie verbunden. Dabei begrenzt die Nut 3 das zweite Batteriemodul 11 in der Querrichtung zu der Einschubrichtung der Feder 17 in die Nut 3 und der Erstreckungsrichtung der Nut 3.

Die Feder 17 des zweiten Batteriemoduls 11, das Verbindungsmittel 8 und das Schraubmittel 9 überlappen einander in der Querrichtung zu der Einschubrichtung der Feder 17 in die Nut 3 und der Erstreckungsrichtung der Nut 3. Dabei ist das Schraubmittel 9, insbesondere dessen Schraubenkopf, zumindest teilweise zwischen der Feder 17 und dem Verbindungsmittel 8 angeordnet. Somit ist das Schraubmittel 9 verdeckt von der Feder 17. Vorzugsweise berührt die Feder 17 das Verbindungsmittel 8 und das Schraubmittel 9. Vorzugsweise sind das Gehäuse des ersten Batteriemoduls 1, insbesondere die Nut 3, und das Schraubmittel 9 beabstandet voneinander angeordnet. Vorzugsweise erstreckt sich das Schraubmittel 9 im Wesentlichen parallel zu der Querrichtung zu der Einschubrichtung der Feder 17 in die Nut 3 und der Erstreckungsrichtung der Nut 3 in das Gehäuse 20 der Batterie.

Ein erfindungsgemäßes Verfahren zur Herstellung einer Batterie weist die zeitlich aufeinanderfolgenden Verfahrensschritte auf:
In einem ersten Verfahrensschritt wird ein erstes Batteriemodul 1 mit einem Gehäuse 20 der Batterie verbunden, indem ein Verbindungsmittel 8 in eine Nut 3 des ersten Batteriemoduls 1 eingeführt wird und mit dem Gehäuse 20 der Batterie verbunden wird, insbesondere schraubverbunden. Vorzugsweise wird dabei das Verbindungsmittel 8 innerhalb der Nut 3 verschoben, insbesondere in Erstreckungsrichtung der Nut 3 verschoben, um das Verbindungsmittel 8 relativ zu einer Ausnehmung, insbesondere einer Gewindebohrung, für ein Schraubmittel 9 in dem Gehäuse 20 der Batterie auszurichten.

In einem zweiten Verfahrensschritt wird ein zweites Batteriemodul 11 neben dem ersten Batteriemodul 1 angeordnet, wobei eine Feder 17 des zweiten Batteriemoduls 11 in die Nut 3 eingeführt wird.

In einem dritten Verfahrensschritt wird das zweite Batteriemodul 11 mit dem Gehäuse 20 der Batterie verbunden, indem ein weiteres Verbindungsmittel 18 in eine Nut 13 des zweiten Batteriemoduls 11 eingeführt wird und mit dem Gehäuse 20 der Batterie verbunden wird, insbesondere schraubverbunden. Vorzugsweise wird dabei das weitere Verbindungsmittel 18 innerhalb der Nut 13 verschoben, insbesondere in Erstreckungsrichtung der Nut 13 verschoben, um das Verbindungsmittel 18 relativ zu einer weiteren Ausnehmung, insbesondere einer Gewindebohrung, für ein weiteres Schraubmittel 19 in dem Gehäuse 20 der Batterie auszurichten.

## Patentansprüche

1. Batterie aufweisend ein Gehäuse (20) und zumindest ein erstes Batteriemodul (1) und ein zweites Batteriemodul (11), wobei
ein Gehäuse des ersten Batteriemoduls (1) eine Nut (3) aufweist,
ein Gehäuse des zweiten Batteriemoduls (11) eine Feder (17) aufweist,
das erste Batteriemodul (1) mittels eines Verbindungsmittels (8) mit dem Gehäuse (20) der Batterie verbunden ist, und
die Feder (17) und das Verbindungsmittel (8) zumindest teilweise in der Nut (3) angeordnet sind, insbesondere spielfrei in der Nut (3) aufgenommen sind, wobei das Verbindungsmittel (8) mittels eines Schraubmittels (9) mit dem Gehäuse (20) der Batterie verbunden ist, und
das Verbindungsmittel (8) eine Ausnehmung aufweist, durch die das Schraubmittel (9) zumindest teilweise hindurchgeführt ist,
**dadurch gekennzeichnet, dass**
das Verbindungsmittel (8) in einer Erstreckungsrichtung der Nut (3) verschiebbar in der Nut (3) angeordnet ist.

2. Batterie nach Anspruch 1,
**dadurch gekennzeichnet, dass**
das Schraubmittel (9) von der Nut (3) beabstandet ist.

3. Batterie nach einem der Ansprüche 1 oder 2,
**dadurch gekennzeichnet, dass**
die Feder (17), das Schraubmittel (9) und das Verbindungsmittel (8) einander überlappen, insbesondere in Richtung eines Normalenvektors einer Ebene eines Flächenabschnitts des Gehäuses (20) der Batterie auf dem die Batteriemodule (1, 11) angeordnet sind, insbesondere wobei die Feder (17) das Schraubmittel (9) verdeckt.

4. Batterie nach einem der Ansprüche 1 bis 3,
**dadurch gekennzeichnet, dass**
das Schraubmittel (9), insbesondere ein Schraubenkopf des Schraubmittels (9), zumindest teilweise zwischen der Feder (17) und dem Verbindungsmittel (8) angeordnet ist, insbesondere wobei die Feder (17) das Schraubmittel (9) berührt.

5. Batterie nach einem der vorhergehenden Ansprüche,
**dadurch gekennzeichnet, dass**
das zweite Batteriemodul (11) begrenzt ist mittels der in der Nut (3) angeordneten Feder (17), insbesondere in Richtung eines Normalenvektors einer Ebene eines Flächenabschnitts des Gehäuses (20) der Batterie auf dem die Batteriemodule (1, 11) angeordnet sind.

6. Batterie nach einem der vorhergehenden Ansprüche,
**dadurch gekennzeichnet, dass**
das erste Batteriemodul (1) eine weitere Feder (7) aufweist, die von der Nut (3) beabstandet angeordnet ist.

7. Batterie nach einem der vorhergehenden Ansprüche,
**dadurch gekennzeichnet, dass**
das zweite Batteriemodul (11) eine weitere Nut (13) aufweist, die von der Feder (17) beabstandet ist,
wobei das zweite Batteriemodul (11) mittels eines weiteren Verbindungsmittels (18) mit dem Gehäuse (20) der Batterie verbunden ist,
wobei das weitere Verbindungsmittel (18) zumindest teilweise in der weiteren Nut (13) angeordnet ist.

8. Batterie nach einem der Ansprüche 6 oder 7,
**dadurch gekennzeichnet, dass**
die jeweilige Nut (3, 13) und die jeweilige Feder (7, 17) des jeweiligen Batteriemoduls (1, 11) sich jeweils im Wesentlichen parallel zueinander erstrecken.

9. Batterie nach einem der vorhergehenden Ansprüche,
**dadurch gekennzeichnet, dass**
das Gehäuse des jeweiligen Batteriemoduls (1, 11) jeweils einen Gehäuseboden (5, 15) aufweist,
wobei die jeweilige Nut (3, 13) in dem Gehäuseboden (5, 15) ausgeformt ist, und/oder wobei der Gehäuseboden (5, 15) die jeweilige Feder (7, 18) aufweist.

10. Batterie nach Anspruch 9,
**dadurch gekennzeichnet, dass**
der jeweilige Gehäuseboden (5, 15) hohl ausgeführt ist zur Aufnahme eines Kühlfluids,
insbesondere wobei der jeweilige Gehäuseboden (5, 15) eine Einlassöffnung (4, 14) und eine Auslassöffnung (6, 16) für das Kühlfluid aufweist.

11. Verfahren zur Herstellung einer Batterienach einem der Ansprüche 1 bis 10, aufweisend die zeitlich aufeinanderfolgenden Verfahrensschritte:
- in einem ersten Verfahrensschritt wird ein erstes Batteriemodul (1) mit einem Gehäuse (20) der Batterie verbunden, indem ein Verbindungsmittel (8) in eine Nut (3) des ersten Batteriemoduls (1) eingeführt wird und mit dem Gehäuse (20) der Batterie verbunden wird,
- in einem zweiten Verfahrensschritt wird ein zweites Batteriemodul (11) mit dem ersten Batteriemodul (1) formschlüssig verbunden, indem eine Feder (17) des zweiten Batteriemoduls (11) in die Nut (3) eingeführt wird,
- in einem dritten Verfahrensschritt wird das zweite Batteriemodul (11) mit dem Gehäuse (20) der Batterie verbunden, indem ein weiteres Verbindungsmittel (8) in eine weitere Nut (13) des zweiten Batteriemoduls (11) eingeführt wird und mit dem Gehäuse (20) der Batterie verbunden wird;
im ersten und/oder dritten Verfahrensschritt das Verbindungsmittel (8) beziehungsweise das weitere Verbindungsmittel (18) mittels eines Schraubmittels (9, 19) mit dem Gehäuse (20) der Batterie verbunden wird,
**dadurch gekennzeichnet, dass**
das Verbindungsmittel (8) in einer Erstreckungsrichtung der Nut (3) verschiebbar in der Nut (3) angeordnet ist.

## Claims

1. Battery having a housing (20) and at least a first battery module (1) and a second battery module (11), wherein
a housing of the first battery module (1) has a groove (3),
a housing of the second battery module (11) has a tongue (17),
the first battery module (1) is connected to the housing (20) of the battery by means of a connecting means (8), and
the tongue (17) and the connecting means (8) are at least partially arranged in the groove (3), in particular are received in the groove (3) without play, wherein
the connecting means (8) is connected to the housing (20) of the battery by means of a screwing means (9), and the connecting means (8) has a recess through which the screwing means (9) is at least partially guided, **characterized in that**
the connecting means (8) is arranged in the groove (3) in a manner displaceable in a direction of extent of the groove (3).

2. Battery according to Claim 1,
**characterized in that**
the screwing means (9) is spaced apart from the groove (3) .

3. Battery according to either of Claims 1 and 2,
**characterized in that**
the tongue (17), the screwing means (9) and the connecting means (8) overlap, in particular in the direction of a normal vector of a plane of a surface portion of the housing (20) of the battery on which surface portion the battery modules (1, 11) are arranged, in particular wherein the tongue (17) conceals the screwing means (9).

4. Battery according to one of Claims 1 to 3,
**characterized in that**
the screwing means (9), in particular a screw head of the screwing means (9), is at least partially arranged between the tongue (17) and the connecting means (8), in particular wherein the tongue (17) touches the screwing means (9).

5. Battery according to one of the preceding claims,
**characterized in that**
the second battery module (11) is delimited by means of the tongue (17) arranged in the groove (3), in particular in the direction of a normal vector of a plane of a surface portion of the housing (20) of the battery on which surface portion the battery modules (1, 11) are arranged.

6. Battery according to one of the preceding claims,
**characterized in that**
the first battery module (1) has a further tongue (7) which is arranged spaced apart from the groove (3).

7. Battery according to one of the preceding claims,
**characterized in that**
the second battery module (11) has a further groove (13) which is spaced apart from the tongue (17),
wherein the second battery module (11) is connected to the housing (20) of the battery by means of a further connecting means (18),
wherein the further connecting means (18) is at least partially arranged in the further groove (13).

8. Battery according to either of Claims 6 and 7,
**characterized in that**
the respective groove (3, 13) and the respective tongue (7, 17) of the respective battery module (1, 11) each extend substantially parallel to one another.

9. Battery according to one of the preceding claims,
**characterized in that**
the housing of the respective battery module (1, 11) has a housing base (5, 15) in each case,
wherein the respective groove (3, 13) is formed in the housing base (5, 15), and/or
wherein the housing base (5, 15) has the respective tongue (7, 18).

10. Battery according to Claim 9,
**characterized in that**
the respective housing base (5, 15) is of hollow design for receiving a cooling fluid,
in particular wherein the respective housing base (5, 15) has an inlet opening (4, 14) and an outlet opening (6, 16) for the cooling fluid.

11. Method for producing a battery according to one of Claims 1 to 10,
comprising the successive method steps:
- in a first method step, a first battery module (1) is connected to a housing (20) of the battery by way of a connecting means (8) being inserted into a groove (3) of the first battery module (1) and being connected to the housing (20) of the battery,
- in a second method step, a second battery module (11) is connected to the first battery module (1) in a form-fitting manner by way of a tongue (17) of the second battery module (11) being inserted into the groove (3),
- in a third method step, the second battery module (11) is connected to the housing (20) of the battery by way of a further connecting means (8) being inserted into a further groove (13) of the second battery module (11) and being connected to the housing (20) of the battery;
in the first and/or third method step, the connecting means (8) or the further connecting means (18) being connected to the housing (20) of the battery by means of a screwing means (9, 19),
**characterized in that**
the connecting means (8) is arranged in the groove (3) in a manner displaceable in a direction of extent of the groove (3).

## Revendications

1. Batterie présentant un boîtier (20) et au moins un premier module de batterie (1) et un deuxième module de batterie (11), dans laquelle
un boîtier du premier module de batterie (1) présente une rainure (3),
un boîtier du deuxième module de batterie (11) présente une languette (17),
le premier module de batterie (1) est relié au boîtier (20) de la batterie au moyen d'un moyen de liaison (8), et
la languette (17) et le moyen de liaison (8) sont disposés au moins partiellement dans la rainure (3), en particulier sont reçus sans jeu dans la rainure (3), dans laquelle le moyen de liaison (8) est relié au boîtier (20) de la batterie au moyen d'un moyen de vissage (9), et
le moyen de liaison (8) présente un évidement à travers lequel le moyen de vissage (9) est guidé au moins partiellement,
**caractérisée en ce que**
le moyen de liaison (8) est disposé dans la rainure (3) de manière déplaçable dans une direction d'étendue de la rainure (3).

2. Batterie selon la revendication 1,
**caractérisée en ce que**
le moyen de vissage (9) est espacé de la rainure (3).

3. Batterie selon l'une des revendications 1 ou 2,
**caractérisée en ce que**
la languette (17), le moyen de vissage (9) et le moyen de liaison (8) se chevauchent les uns les autres, en particulier sont disposés dans la direction d'un vecteur normal à un plan d'une partie de surface du boîtier (20) de la batterie, partie de surface sur laquelle les modules de batterie (1, 11) sont disposés, en particulier la languette (17) recouvrant le moyen de vissage (9).

4. Batterie selon l'une des revendications 1 à 3,
**caractérisée en ce que**
le moyen de vissage (9), en particulier une tête de vis du moyen de vissage (9), est disposé au moins partiellement entre la languette (17) et le moyen de liaison (8), en particulier la languette (17) étant en contact avec le moyen de vissage (9).

5. Batterie selon l'une des revendications précédentes,
**caractérisée en ce que**
le deuxième module de batterie (11) est limité au moyen de la languette (17) disposée dans la rainure (3), en particulier est disposé dans la direction d'un vecteur normal à un plan d'une partie de surface du boîtier (20) de la batterie, partie de surface sur laquelle les modules de batterie (1, 11) sont disposés.

6. Batterie selon l'une des revendications précédentes,
**caractérisée en ce que**
le premier module de batterie (1) présente une autre languette (7) qui est disposée de manière espacée de la rainure (3).

7. Batterie selon l'une des revendications précédentes,
**caractérisée en ce que**
le deuxième module de batterie (11) présente une autre rainure (13) qui est espacée de la languette (17),
le deuxième module de batterie (11) étant relié au boîtier (20) de la batterie au moyen d'un autre moyen de liaison (18),
l'autre moyen de liaison (18) étant disposé au moins partiellement dans l'autre rainure (13).

8. Batterie selon l'une des revendications 6 ou 7,
**caractérisée en ce que**
la rainure (3, 13) respective et la languette (7, 17) respective du module de batterie (1, 11) respectif s'étendent respectivement sensiblement parallèlement l'une à l'autre.

9. Batterie selon l'une des revendications précédentes,
**caractérisée en ce que**
le boîtier du module de batterie (1, 11) respectif présente respectivement un fond de boîtier (5, 15),
la rainure (3, 13) respective étant formée dans le fond de boîtier (5, 15), et/ou le fond de boîtier (5, 15) présentant la languette (7, 18) respective.

10. Batterie selon la revendication 9,
**caractérisée en ce que**
le fond de boîtier (5, 15) respectif est réalisé de manière creuse pour la réception d'un fluide de refroidissement,
en particulier le fond de boîtier (5, 15) respectif présentant une ouverture d'entrée (4, 14) et une ouverture de sortie (6, 16) pour le fluide de refroidissement.

11. Procédé de fabrication d'une batterie selon l'une des revendications 1 à 10, présentant les étapes de procédé suivantes successives dans le temps :
- dans une première étape de procédé, un premier module de batterie (1) est relié à un boîtier (20) de la batterie, par le fait qu'un moyen de liaison (8) est inséré dans une rainure (3) du premier module de batterie (1) et est relié au boîtier (20) de la batterie,
- dans une deuxième étape de procédé, un deuxième module de batterie (11) est relié par complémentarité de formes au premier module de batterie (1), par le fait qu'une languette (17) du deuxième module de batterie (11) est insérée dans la rainure (3),
- dans une troisième étape de procédé, le deuxième module de batterie (11) est relié au boîtier (20) de la batterie, par le fait qu'un autre moyen de liaison (8) est inséré dans une autre rainure (13) du deuxième module de batterie (11) et est relié au boîtier (20) de la batterie ;
dans la première et/ou la troisième étape de procédé, le moyen de liaison (8), respectivement l'autre moyen de liaison (18), est relié au boîtier (20) de la batterie au moyen d'un moyen de vissage (9, 19),
**caractérisé en ce que**
le moyen de liaison (8) est disposé dans la rainure (3) de manière déplaçable dans une direction d'étendue de la rainure (3).
